# EUROPÄISCHE PATENTANMELDUNG

(11) **EP 1 310 766 A1**
(43) Veröffentlichungstag der Anmeldung: **14.05.2003**
(21) Anmeldenummer: 01811089.0
(22) Anmeldetag: 13.11.2001
(51) Int. Cl.: G01C 21/20, G06F 19/00, G09F 1/10

(54) **Navigationscomputer**

(71) Anmelder: TB-Electronics GmbH., 9443 Widnau (CH)
(72) Erfinder: Böhme, Thomas, 9443 Widnau (CH)
(74) Vertreter: Hepp, Dieter

(57) **Zusammenfassung**

Die vorliegende Erfindung betrifft eine Vorrichtung zur Erstellung von Flugplänen, umfassend eine Zentraleinheit, einen Befehlseingabebereich sowie eine transparente Platte in einem festen Rahmen, auf der eine transparente, elektrisch leitfähige Folie fest angeordnet ist, sowie ein Verfahren zur Erstellung eines solchen Flugplanes.

## Beschreibung

Die vorliegende Erfindung betrifft eine Vorrichtung sowie ein Verfahren zur Erstellung von Flugplänen für den Sichtflug.

In der Luftfahrt sind zahlreiche Navigationshilfsmittel bekannt. Der Einsatz solcher Geräte beschränkt sich aber praktisch ausschliesslich auf den Instrumentenflug in Grossraumflugzeugen oder Militärflugzeugen. Für den Einsatz in Kleinflugzeugen, die im Sichtflug geflogen werden, sind diese Geräte aber aus mehreren Gründen nicht geeignet. Einerseits sind derartige Geräte sehr kostspielig und müssen einer aufwendigen Wartung unterzogen werden. Weiterhin müssen die Piloten eine spezielle Ausbildung zur Bedienung derartiger Geräte durchlaufen.

Aus diesem Grund werden Flugpläne für Kleinflugzeuge, welche im Sichtflug betrieben werden, nach wie vor häufig mit Hilfe von Flugkarten, Kompass und Winkelmesser erstellt. Dies ist besonders dann nachteilig, wenn während des Fluges der Pilot aus irgend welchen Gründen zu einer Änderung des Kurses gezwungen ist.

Zur Überwindung dieser Nachteile wurden im Stand der Technik Navigationshilfen vorgeschlagen, bei denen nach Eingabe von Daten ein Computer den Flugplan berechnet und anzeigt.

Beispielsweise ist in der französischen Patentanmeldung FR- 2 637 682 eine Flugplanerstellungshilfe beschrieben, bei der eine Flugkarte zwischen ein elektrische Tasten aufweisendes Panel und eine transparente Platte gelegt wird. Die transparente Platte weist Löcher auf, durch welche man jeweils einen roten und einen blauen Stecker führen und somit einen Kontakt auf dem Panel auslösen kann. Auf diese Weise ist es möglich, Anfangs- und Endpunkte einer Flugstrecke einzugeben. Dieses Gerät weist den Nachteil auf, dass es aus separaten Teilen besteht und daher insbesondere während des Fluges nicht einfach zu bedienen ist.

Im US-Patent US 4 220 994 ist eine Navigationsbedienungshilfe beschrieben, bei der Daten hauptsächlich über ein Keyboard eingegeben werden. Zusätzlich ist es möglich, mit Hilfe eines Leuchtstifts Punkte auf dem Bildschirm einer Kathodenstrahlröhre zu markieren. Insgesamt besteht die Vorrichtung allerdings aus grösseren, Platz einnehmenden Teilen. Da im Sichtflug betriebene Kleinflugzeuge in der Regel nur von einer einzigen Person gesteuert werden, ist die Eingabe von Daten über ein Keyboard und das Nachvollziehen der Eingabe auf einem Monitor während des Fluges umständlich und nachteilig.

Im US-Patent US 5 340 061 ist eine Navigationshilfe beschrieben, bei der Daten über ein Touch-Panel eingegeben werden können. Dieses Touch-Panel ist in Art einer Computermaus ausgestaltet, so dass die Bedienung des Computerprogramms durch Fingerdruck auf das entfernt vom Computer angeordnete Touch-Panel erfolgt. Das Touch-Panel umfasst einen quaderförmigen Kasten, in welchem auf mechanischem Wege ein elektrisches Signal erzeugt wird.

Es war die Aufgabe der vorliegenden Erfindung, die vorstehend beschriebenen Nachteile des Stands der Technik zu überwinden und einen einfach bedienbaren Navigationscomputer bereitzustellen.

Diese Aufgabe wird gemäss der vorliegenden Erfindung durch eine Vorrichtung zur Erstellung eines Flugplans gemäss Anspruch 1 und ein Verfahren zur Erstellung eines Flugplans gemäss Anspruch 5 gelöst. Im Einzelnen betrifft die vorliegende Erfindung eine Vorrichtung zur Erstellung von Flugplänen, umfassend eine Zentraleinheit, einen Befehlseingabebereich sowie eine transparente Platte in einem festen Rahmen, auf der eine transparente, elektrisch leitfähige Folie fest angeordnet ist. Vorzugsweise besteht die transparente Platte aus Glas und ist die leitfähige Folie eine Folie aus Polyvinylchlorid (PVC).

Gemäss einer bevorzugten Ausführungsform der vorliegenden Erfindung kann die Vorrichtung weiterhin ein oder mehrere Gegenstände aus der Gruppe, bestehend aus einem Display, einem Batteriefach, mindestens einer Schnittstelle sowie einem Anschluss zu einer externen Spannungsquelle umfassen.

Gemäss einer weiteren bevorzugten Ausführungsform der vorliegenden Erfindung umfasst die Vorrichtung eine Empfangseinrichtung für Global Positioning System (GPS)-Signale.

Die vorliegende Erfindung betrifft weiterhin ein Verfahren zur Erstellung eines Flugplans, umfassend die Schritte
a) gegebenenfalls Eingabe von Konstanten,
b) Legen der Glasplatte auf eine Flugkarte, wobei die Glasplatte nach Norden ausgerichtet werden muss,
c) Eingabe der Koordinaten für den Startpunkt eines Streckenabschnitts und den Endpunkt eines Streckenabschnitts mittels Berühren der entsprechenden Punkte der auf der Glasplatte angebrachten Folie, sowie
d) Berechnung und Ausgabe von Daten.

Gemäss einer bevorzugten Ausführungsform der vorliegenden Erfindung können die Schritte c) und d) jeweils unter Verwendung der Koordinaten für den Endpunkt des zuvor eingegebenen Streckenabschnitts als Koordinaten für den Startpunkt der neuen Berechnung mehrmals nacheinander durchgeführt werden.

Weiterhin betrifft die vorliegende Erfindung die Verwendung der vorstehend beschriebenen Vorrichtung zur Erstellung eines Flugplans sowie die Verwendung einer transparenten Glasplatte mit einer fest darauf angebrachten transparenten, elektrisch leitfähigen Folie für eine Vorrichtung zur Erstellung von Flugplänen. Die vorliegende Erfindung wird nachstehend unter Bezugnahme auf die beiliegenden Zeichnungen, welche in keinster Weise den Gegenstand der vorliegenden Erfindung einschränken sollen, näher beschrieben.
- Figur 1: zeigt eine schematische Draufsicht der erfindungsgemässen Vorrichtung.
- Figur 2 bis 5: zeigt ein Flussdiagramm zur Veranschaulichung der Arbeitsweise der erfindungsgemässen Vorrichtung.

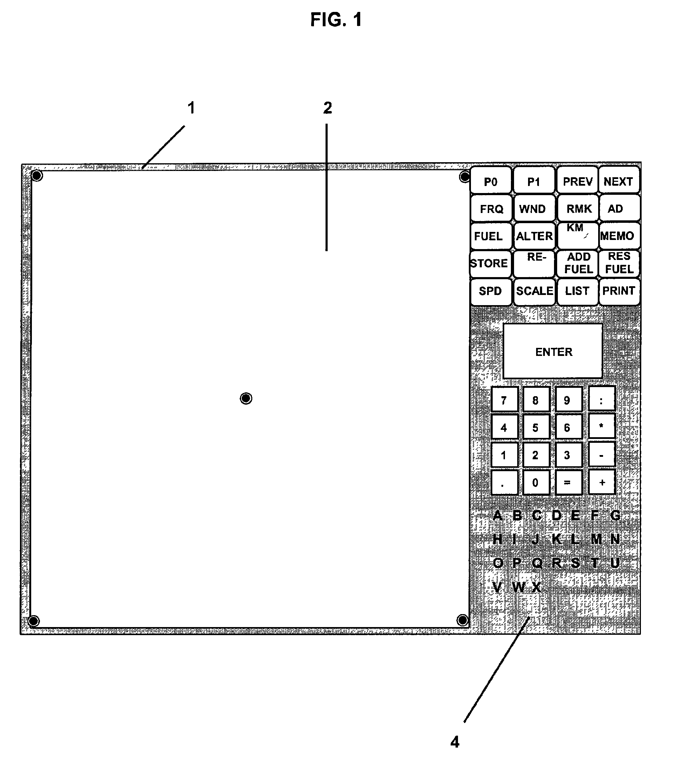

Wie in Figur 1 gezeigt umfasst die erfindungsgemässe Vorrichtung einen festen Rahmen 1, in welchen eine transparente Platte 2 fest angeordnet ist. Auf der transparenten Platte 2 ist eine transparente, elektrisch leitfähige Folie 3 fest angeordnet. Weiterhin umfasst der feste Rahmen 1 einen Befehls-Eingabebereich 4. Eine mögliche Anordnung dieser Komponenten ist in Figur 1 gezeigt. Es ist für den Fachmann jedoch klar, dass auch andere Anordnungen dieser Komponenten möglich sind.

Der feste Rahmen 1 kann aus jedem Material gefertigt sein, in welchem eine transparente Platte fest angeordnet werden kann. Erfindungsgemäss bevorzugt ist der feste Rahmen 1 aus einem Metall oder einer Metalllegierung gefertigt, wobei Aluminium als Werkstoff besonders bevorzugt ist.

In dem festen Rahmen 1 ist eine transparente Platte 2 fest angeordnet. Dadurch wird ermöglicht, dass die erfindungsgemässe Vorrichtung auf eine standardmässig für Sichtflüge verwendete Flugkarte (ICAO-Karten) gelegt werden kann. Als Material, aus dem die Platte 2 gefertigt ist, kann somit jeder transparente Werkstoff verwendet werden. Beispielsweise seien Glas oder transparente Kunststoffe wie beispielsweise Acrylglas aufgeführt. Erfindungsgemäss bevorzugt ist die transparente Platte aus Glas gefertigt.

Die feste Anordnung der transparenten Platte 2 im Rahmen 1 kann auf herkömmliche Art und Weise erfolgen. Beispielsweise kann die Platte 2 mittels eines Klebstoffes im Rahmen 1 befestigt werden, wobei die üblichen, dem Fachmann bekannten Klebstoffe hierfür eingesetzt werden können. Es ist aber auch möglich, die Platte 2 durch übliche Befestigungsmittel wie Schrauben, Nieten oder Klemmen fest mit dem Rahmen 1 zu verbinden.

Die transparente Platte 2 ist gemäss der vorliegenden Erfindung auf eine ihrer Oberflächen mit einer Folie versehen. Diese Folie muss transparent und elektrisch leitfähig sein. Grundsätzlich kann als Material für die Folie jeder Werkstoff eingesetzt werden, der diese Anforderungen erfüllt. Erfindungsgemäss bevorzugt ist die Verwendung von transparenten und elektrisch leitfähigen Kunststoffen wie z.B. Polyvinylchlorid (PVC).

Durch die Transparenz der Platte 2 und der fest darauf angeordneten Folie 3 ist es möglich, dass die erfindungsgemässe Vorrichtung auf eine üblicherweise für den Sichtflug verwendete Flugkarte (ICAO-Karte) gelegt werden kann. Die transparente, elektrisch leitfähige Folie 3 fungiert als Touch-Panel. Es ist also möglich, durch Druck auf ausgewählte Bereiche der Folie 3 elektrische Signale auszulösen und somit Daten in die erfindungsgemässe Vorrichtung einzugeben. Während der Erstellung des Flugplanes wird die erfindungsgemässe Vorrichtung wie vorstehend beschrieben auf eine Flugkarte gelegt. Auf diese Weise ist es möglich, mit Hilfe der sich unter der Vorrichtung befindenden Flugkarte, die aufgrund der Transparenz der Platte 2 und der Folie 3 für den Bediener sichtbar ist, die gewünschten Start-, Zwischen- und Endpunkte des Flugplanes auf einfache Weise zu identifizieren und durch Druck auf die entsprechenden, sich über den identifizierten Stellen der Flugkarte befindenden Bereiche der Folie 3 die entsprechenden Koordinaten in den Computer einzugeben. Dadurch ergibt sich eine äusserst einfache Bedienung der erfindungsgemässen Vorrichtung, was insbesondere bei Änderungen des Flugplanes während des Fluges durch eine einzige im Flugzeug befindliche Person sehr vorteilhaft ist.

Während des Betriebs ist an die Folie 3 ein gleichförmiges Feld geringer Spannung angelegt. Wenn eine Stelle der Folie 3 beispielsweise mit einem Finger berührt wird, wird das Spannungsfeld an der entsprechenden Stelle verändert, wodurch sich entsprechend eine Änderung des elektrischen Widerstands ergibt. Diese Widerstandsänderung ist mit Hilfe einer geeigneten, dem Fachmann geläufigen Ansteuerung und Auswertung erfassbar. Mit Hilfe einer Zentraleinheit können daraus die Koordinaten des Punktes bestimmt werden, auf denen von aussen beispielsweise durch Druck mit einem Finger eingewirkt wurde.

Die Platte 2 und die Folie 3 sind fest miteinander verbunden. Gemäss einer erfindungsgemäss bevorzugten Ausführungsform sind die Platte 2 und die Folie 3 miteinander unter Verwendung eines üblichen, dem Fachmann geläufigen Klebstoffs verklebt.

Die erfindungsgemässe Vorrichtung umfasst weiterhin einen Befehls-Eingabebereich 4. In diesem Bereich 4 sind, wie in Figur 1 gezeigt, Funktionstasten sowie alphanumerische Tasten angeordnet, mit deren Hilfe die Vorrichtung in einen bestimmten Modus überführt werden kann sowie Daten ein- und ausgegeben werden können. Die Funktionsweise der einzelnen Tasten wird nachstehend bei der Erläuterung des erfindungsgemässen Verfahrens beschrieben.

Nachstehend wird im Detail die Erstellung eines Flugplans mit Hilfe der erfindungsgemässen Vorrichtung erläutert. Zur Erstellung eines Flugplanes sind neben den Koordinaten für die Startund Endpunkte der Flugstrecke auch die Kenntnis von verschiedenen Konstanten wie beispielsweise Fluggeschwindigkeit und Kraftstoffverbrauch erforderlich. Diese Konstanten können wie nachstehend erläutert in die erfindungsgemässe Vorrichtung eingegeben werden oder sind in dieser bereits, beispielsweise aufgrund einer vorhergehenden Erstellung eines Flugplans, im Permanentspeicher gespeichert und stehen für die Erstellung eines neuen Flugplans zur Verfügung.

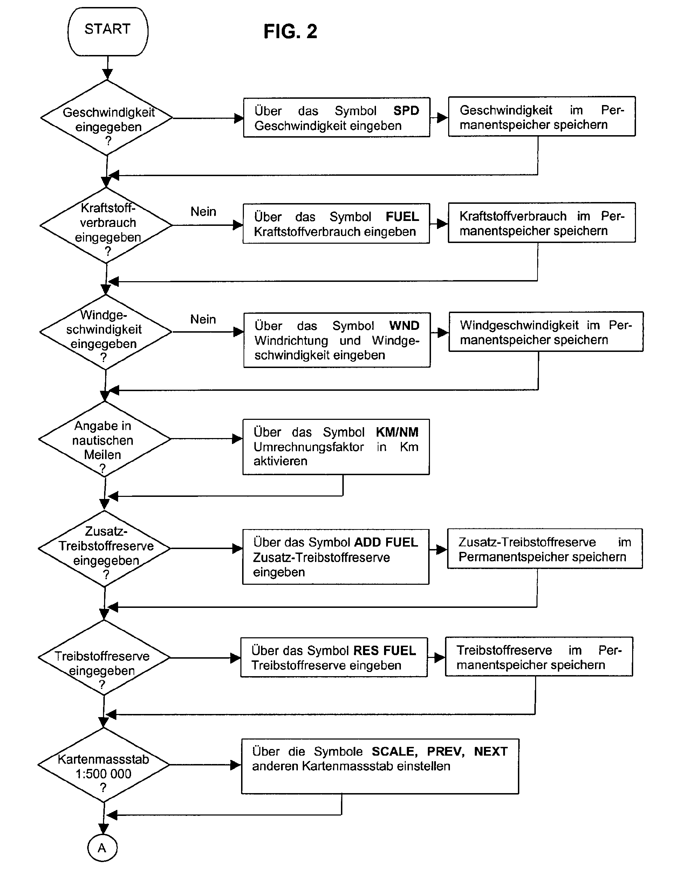

Bei der erfindungsgemässen Vorrichtung ist die Eingabe folgender konstanten Werte vorgesehen: Fluggeschwindigkeit, Kraftstoffverbrauch, Windrichtung und Windgeschwindigkeit, Zusatz-Treibstoffreserve und Treibstoffreserve. Des weiteren lässt die erfindungsgemässe Vorrichtung die Festlegung zu, ob die berechneten Daten in nautischen Meilen oder in Kilometern angegeben werden sollen und ob der standardmässig vorgegebene Kartenmassstab von 1: 500'000 oder wahlweise ein anderer Massstab der Berechnung zugrunde gelegt werden soll. Diese konstanten Werte können wie in Figur 2 gezeigt zu Beginn der Flugplanerstellung durch Betätigung entsprechender Tasten im Befehls-Eingabebereich eingegeben werden. Soll beispielsweise der Kraftstoffverbrauch des Flugzeuges eingegeben werden, ist zunächst die Funktionstaste FUEL zu betätigen. Anschliessend wird der entsprechende Kraftstoffverbrauch mit Hilfe der alphanumerischen Tasten in das System eingegeben. Der entsprechende Wert wird von der erfindungsgemässen Vorrichtung im Permanentspeicher abgelegt. Im Hinblick auf die anderen konstanten Werte wird auf das Flussdiagramm in Figur 2 verwiesen.

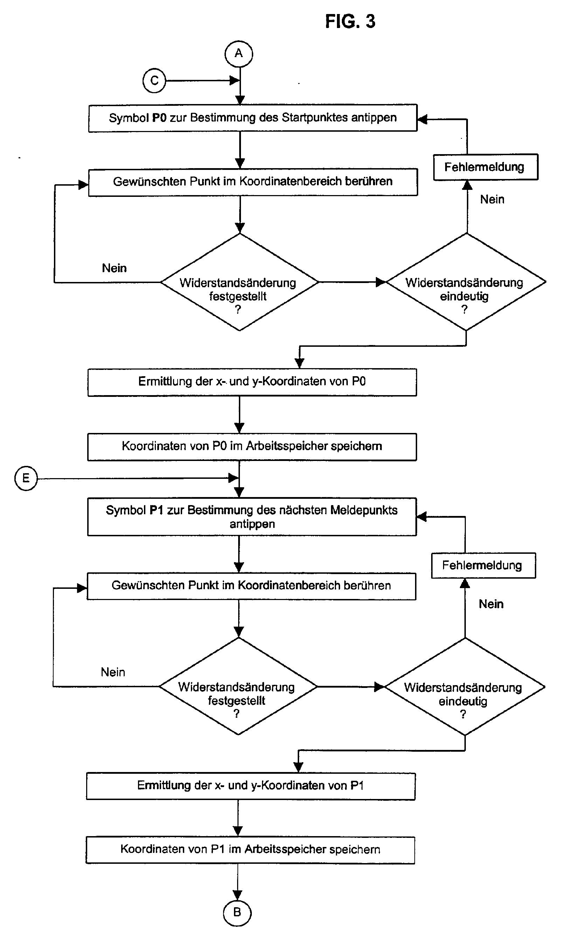

Nach der Eingabe aller erforderlichen konstanten Werte wird wie in Figur 3 gezeigt durch Betätigung der Funktionstaste P0 im Befehls-Eingabebereich die erfindungsgemässe Vorrichtung in den Eingabemodus für die gewünschte Flugstrecke versetzt. Nach der Betätigung der Funktionstaste P0 wartet das System darauf, dass es eine Widerstandsänderung auf der Folie 3 feststellt, die beispielsweise durch Berührung eines Punktes auf dieser Folie mittels eines Fingers ausgelöst werden kann. Sofern die ermittelte Widerstandsänderung eindeutig ist, ermittelt das System daraus die X- und Y-Koordinaten des Startpunktes P0. War die Widerstandsänderung nicht eindeutig genug zur Ermittlung von präzisen Koordinaten, beispielsweise aufgrund gleichzeitigem Druck auf mehrere verschiedene Stellen der Folie 3, so gibt das System eine Fehlermeldung aus. Der Bediener muss daraufhin das System durch erneutes Drücken der Funktionstaste P0 wieder in den Eingabemodus versetzen.

Auf analoge Weise können die Koordinaten für den Endpunkt P1 des ersten Streckenabschnitts eingegeben und berechnet werden. Die ermittelten Koordinaten für die Punkte P0 und P1 werden im Arbeitsspeicher abgelegt.

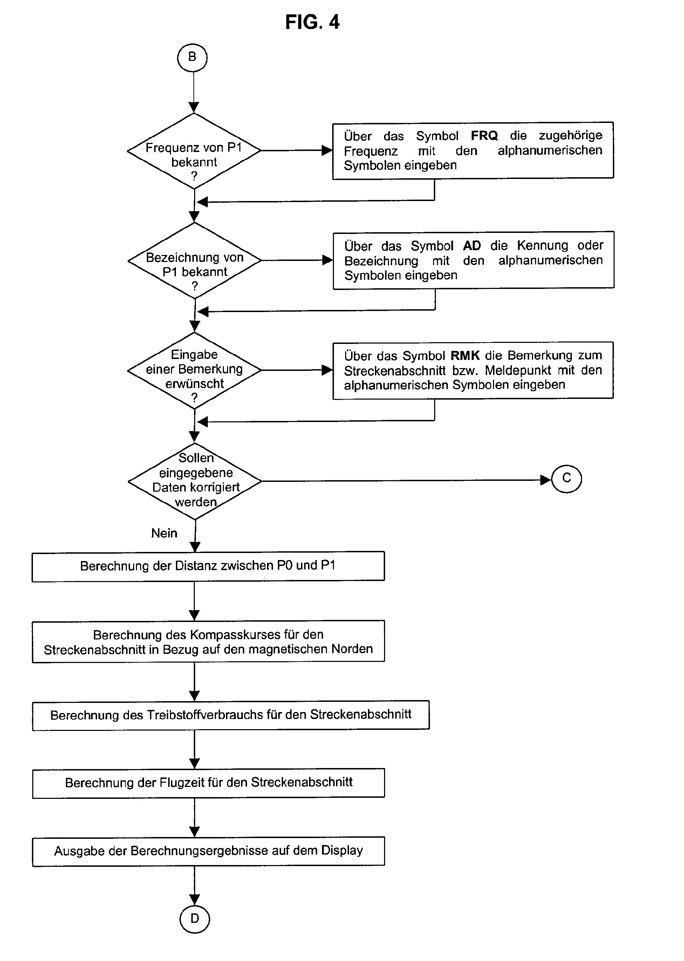

Bei einem derartigen Punkt P1 kann es sich beispielsweise auch um einen Meldepunkt handeln, an welchem sich der Pilot beispielsweise im Klartext mit einer bestimmten Bodenkontrollstation in Verbindung setzen muss. Zur Erleichterung dieser Tätigkeit während des Fluges erlaubt es die erfindungsgemässe Vorrichtung, die Bezeichnung eines derartigen Meldepunkts, die an diesen Meldepunkt zu verwendete Frequenz und/oder weitere Bemerkungen zu diesem Meldepunkt anzugeben. In Figur 4 ist die Eingabe der entsprechenden Informationen mit Hilfe der zugehörigen Funktionstasten aufgeführt.

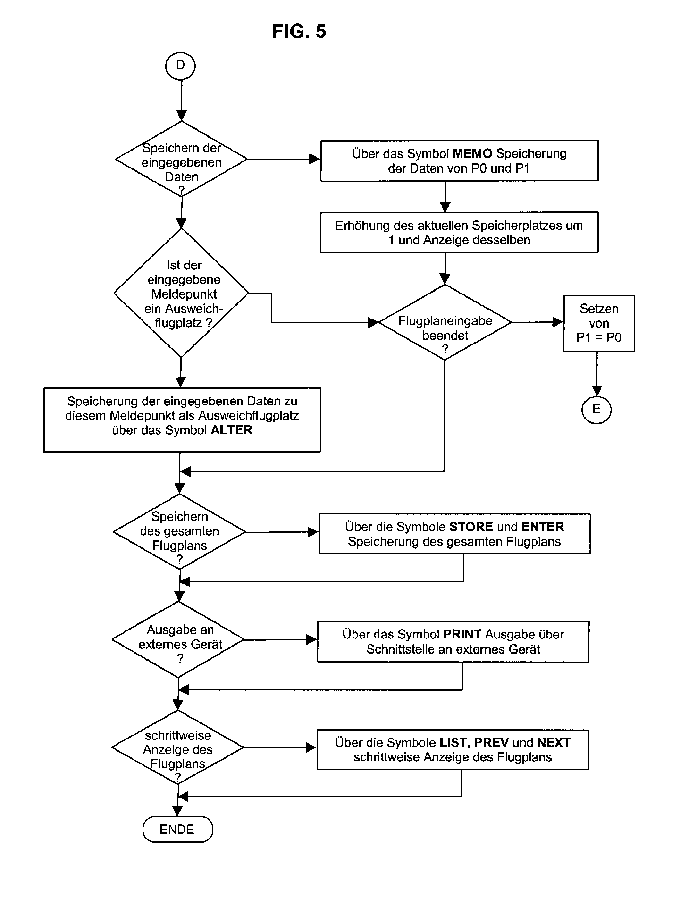

Das System fordert nun den Bediener zur Bestätigung der eingegebenen Daten auf. Sobald diese Bestätigung erfolgt ist, berechnet die erfindungsgemässe Vorrichtung die gewünschten Daten. Dabei handelt es sich im einzelnen um die Distanz zwischen den Strekkenabschnittspunkten P0 und P1, um den Kompasskurs für den Streckenabschnitt in Bezug auf den magnetischen Norden, um den Treibstoffverbrauch für den betreffenden Streckenabschnitt sowie um die zu erwartende Flugzeit. Die entsprechenden Daten können auf einem Display angezeigt werden, das vorzugsweise oberhalb der transparenten Platte 2 angeordnet ist. Die so berechneten Daten können zudem durch Betätigung der Funktionstaste MEMO gespeichert werden. Zusätzlich kann festgelegt werden, ob es sich um den zuvor eingegebenen Meldepunkt um einen Ausweichflugplatz handelt. Diese Möglichkeiten sind in Figur 5 veranschaulicht.

Die Flugplaneingabe ist nun beendet. Der gesamte Flugplan kann nun entweder in einem innerhalb der erfindungsgemässen Vorrichtung befindlichen Speichermedium abgelegt werden, an ein externes Speichermedium wie beispielsweise einen Memorystick abgegeben und dort archiviert werden, oder mit Hilfe entsprechender Schnittstellen, die an der erfindungsgemässen Vorrichtung vorgesehen sind, in Datenform an externe Geräte wie beispielsweise ein GPS (Global Positioning System), einen Drucker oder einen Personal Computer übermittelt werden. Hierfür kann jede herkömmlich verwendete Schnittstelle herangezogen werden. Erfindungsgemässe bevorzugt ist die Verwendung einer RS232-Schnittstelle.

Gemäss einer bevorzugten Ausführungsform der vorliegenden Erfindung kann die erfindungsgemässe Vorrichtung eine Empfangseinrichtung für Global Positioning system (GPS)-Signale umfassen. Diese GPS-Empfangseinrichtung ist an sich bekannt und kann ohne Schwierigkeiten in die erfindungsgemässe Vorrichtung integriert werden. Die mit Hilfe der GPS-Empfangseinrichtung empfangenenen GPS-Signale können in der Vorrichtung durch die Zentraleinheit auf herkömmliche Weise verarbeitet werden.

Nach Eingabe eines ersten Streckenabschnitts können beliebig viele weitere Streckenabschnitte wie vorstehend beschrieben eingegeben werden. Hierbei ist zu berücksichtigen, dass das System den Endpunkt P1 des jeweils zuvor eingegebenen Streckenabschnitts als Startpunkt P0 für den darauf folgend zu berechnenden Streckenabschnitt heranzieht.

Bei dem erfindungsgemäss Verfahren ist es wichtig, dass die erfindungsgemässe Vorrichtung während der Eingabe der Daten des entsprechenden Streckenabschnitts immer nach Norden ausgerichtet ist. Da die erfindungsgemässe Vorrichtung nur relative Daten kennt, kann die Vorrichtung auch beliebig auf der darunter befindlichen Flugkarte verschoben werden. Es muss hierbei aber auch beachtet werden, dass die erfindungsgemässe Vorrichtung ständig nach Norden ausgerichtet ist.

Die erfindungsgemässe Vorrichtung kann über eine externe Stromversorgung oder über Batterien betrieben werden. Gemäss einer bevorzugten Ausführungsform der vorliegenden Erfindung kann daher die Vorrichtung entweder ein Batteriefach zur Aufnahme entsprechender Batterien und/oder einen Anschluss zu einem externen Ladegerät oder einer Steckdose aufweisen.

Der errechnete Flugplan kann wie in Figur 5 gezeigt durch Betätigung der entsprechenden Funktionstasten schrittweise auf dem Display angezeigt werden. In der erfindungsgemässen Vorrichtung können weiterhin mehrere Flugpläne gleichzeitig abgespeichert werden. Ein gewünschter Flugplan kann durch Betätigung der Funktionstaste RECALL und danach der Eingabe des entsprechenden Speicherplatzes des gewünschten Flugplanes über die alphanumerischen Tasten ausgewählt und auf dem Display angezeigt werden.

Aus der vorstehenden Beschreibung ist ersichtlich, dass die erfindungsgemässe Vorrichtung auf einfache Weise bedient werden kann und somit eine schnelle, einfache und zuverlässige Erstellung eines Flugplanes und/oder dessen Änderung während des Fluges ermöglicht.

## Patentansprüche

1. Vorrichtung zur Erstellung von Flugplänen, umfassend eine Zentraleinheit, einen Befehlseingabebereich (4) sowie eine transparente Platte (2) in einem festen Rahmen (1), auf der eine transparente, elektrisch leitfähige Folie (3) fest angeordnet ist.

2. Vorrichtung nach Anspruch 1, wobei die transparente Platte (2) aus Glas besteht.

3. Vorrichtung nach einem der Ansprüche 1 oder 2, wobei die transparente, elektrisch leitfähige Folie (3) eine PVC-Folie ist.

4. Vorrichtung nach einem der Ansprüche 1 bis 3, weiterhin umfassend einen oder mehrere Gegenstände aus der Gruppe, bestehend aus einem Display, einem Batteriefach, mindestens einer Schnittstelle sowie einem Anschluss zu einer externen Spannungsquelle.

5. Vorrichtung nach einem der Ansprüche 1 bis 4, weiterhin umfassend eine Empfangseinrichtung für Global Positioning System (GPS)-Signale.

6. Verfahren zur Erstellung eines Flugplanes, umfassend die Schritte
a) gegebenenfalls Eingabe von konstanten Werten,
b) Legen der transparenten Platte (2) auf eine Flugkarte, wobei die transparente Platte (2) nach Norden ausgerichtet werden muss,
c) Eingabe der Koordinaten für den Startpunkt eines Strekkenabschnittes und Endpunkt eines Streckenabschnittes mittels Berühren der entsprechenden Punkte der auf der transparenten Platte (2) angeordneten Folie (3), und
d) Berechnung und Ausgabe von Daten.

7. Verfahren nach Anspruch 6, wobei die Schritte c) und d) jeweils unter Verwendung der Koordinaten für den Endpunkt des vorhergehenden Streckenabschnitts als Koordinaten für den Startpunkt des neuen Streckenabschnitts mehrmals nacheinander durchgeführt werden.

8. Verfahren nach einem der Ansprüche 6 oder 7, wobei die konstanten Werte bei Schritte a) die Geschwindigkeit, den Kraftstoffverbrauch, die Windrichtung und Windgeschwindigkeit, die Angabe der Zusatz-Treibstoffreserve sowie die Angabe der Treibstoffreserve betreffen.

9. Verfahren nach einem der Ansprüche 6 bis 8, wobei die in Schritt d) berechneten und ausgegebenen Daten die Distanz zwischen den eingegebenen Start- und Endpunkten, den Treibstoffverbrauch und die Flugzeit betreffen.

10. Verfahren nach einem der Ansprüche 6 bis 9, weiterhin umfassend die Eingabe der Bezeichnung und Frequenz eines Meldepunkts sowie von Bemerkungen zu diesem Meldepunkt in Schritt a) .

11. Verfahren nach einem der Ansprüche 6 bis 10, wobei im Schritt d) die Daten auf ein Display und/oder einen Permanentspeicher und/oder weitere externe Geräte ausgegeben werden.

12. Verwendung einer Vorrichtung gemäss einem der Ansprüche 1 bis 5 zur Erstellung eines Flugplanes.

13. Verwendung einer transparenten Platte (2) mit einer fest darauf angeordneten transparenten, elektrisch leitfähigen Folie (3) für eine Vorrichtung zur Erstellung von Flugplänen.
